(19) Europäisches Patentamt
European Patent Office
Office européen des brevets

(11) **EP 3 083 293 B1**

(12) **FASCICULE DE BREVET EUROPEEN**

(45) Date de publication et mention
de la délivrance du brevet:
**03.01.2018 Bulletin 2018/01**

(21) Numéro de dépôt: **14803182.6**

(22) Date de dépôt: **06.11.2014**

(51) Int Cl.:
**B60C 23/20** *(2006.01)*    **B60C 23/00** *(2006.01)*

(86) Numéro de dépôt international:
**PCT/FR2014/052836**

(87) Numéro de publication internationale:
**WO 2015/092176 (25.06.2015 Gazette 2015/25)**

(54) **PROCEDE ET SYSTEME DE SURVEILLANCE DE LA PRESSION D'UN PNEUMATIQUE**

REIFENDRUCKÜBERWACHUNGSVERFAHREN UND -VORRICHTUNG

TIRE PRESURE MONITORING METHOD AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2013 FR 1362656**

(43) Date de publication de la demande:
**26.10.2016 Bulletin 2016/43**

(73) Titulaire: **Renault s.a.s.**
**92100 Boulogne-Billancourt (FR)**

(72) Inventeurs:
• **VOYER, Geoffrey**
**F-91700 Sainte Genevieve Des Bois (FR)**
• **PITA-GIL, Guillermo**
**F-75014 Paris (FR)**

(56) Documents cités:
**WO-A2-01/03953      WO-A2-02/25291**
**US-A1- 2005 076 987**

**Description**

La présente invention concerne un procédé de surveillance de la pression d'un pneumatique monté sur une jante d'une roue d'un véhicule et d'un système pour la mise en oeuvre d'un tel procédé.

L'invention concerne également un véhicule comportant ce système de surveillance de pression du pneumatique.

Dans le domaine de l'automobile différentes réglementations imposent aux constructeurs automobiles de mettre en oeuvre dans les véhicules qu'ils produisent des procédés et systèmes de surveillance de la pression des pneumatiques. Par exemple, en Europe, la réglementation prévoit que de tels procédés doivent permettent de détecter une variation de pression de plus de 20% pour un pneumatique en dix minutes et une variation de pression de plus de 20% pour quatre pneumatiques en un peu moins d'une heure.

De telles réglementations visent à répondre à une problématique sécuritaire mais également à réduire l'impact environnemental de la circulation automobile. En effet, de nombreuses études ont montré que les risques d'accidents sont plus grands lorsqu'un pneumatique est en état de sur-gonflage car les distances de freinage sont plus importantes, à l'inverse lorsqu'il est en état de sous-gonflage le pneumatique entraîne une surconsommation de carburant et une usure prématurée des pneumatiques.

Dans un tel contexte, les constructeurs automobiles ont développé des procédés de surveillance permettant de détecter une variation de pression du pneumatique qui sont compris dans deux familles : les procédés de surveillance dits « directs » et ceux dits « indirects ».

Dans la famille des procédés de surveillance dits « directs » la détection de la variation de pression du pneumatique est réalisée à partir du traitement d'informations relatives à des mesures de pression et de température du gaz contenu dans ce pneumatique.

Un tel traitement d'informations est réalisé à partir des systèmes de surveillance tels que des unités de calcul du véhicule ou encore plus spécifiquement par des boîtiers TPMS (acronyme de Tyre Pressure Measurement System).

Ces systèmes sont aptes à collecter ces informations grâce à des capteurs qui sont généralement couplés à la valve du pneumatique, et reliés traditionnellement par une liaison sans fil à l'unité de calcul ou au boîtier.

Ainsi, le procédé de surveillance permet alors de détecter par exemple une fuite ou des états de sous-gonflage ou encore de sur-gonflage du pneumatique à partir de l'évolution de la pression et de la température mesurés dans le temps.

Cependant, de tels procédés de surveillance sont coûteux et peu fiables. Ils entraînent souvent l'apparition de nombreuses fausses alertes, par exemple par la détection à tort de fuites ou d'états de sous-gonflage ou de sur-gonflage du pneumatique. En effet, la pression du gaz contenu dans ce pneumatique et collectée par le capteur peut être amenée à varier de façon importante lors, par exemple, d'une augmentation de la température de la jante du fait de sa proximité avec un module de freinage ou encore lors du passage de la roue sur un obstacle tel qu'une bordure de trottoir.

Le document WO02/25291 décrit un système de surveillance d'un pneumatique dans un véhicule, dans lequel la pression du pneumatique est contrôlée par comparaison de mesures de températures du pneumatique en différents endroits de celui-ci.

Dans la famille des procédés de surveillance dits « indirects », la pression du pneumatique et donc la variation de cette pression n'est plus mesurée mais estimée par les systèmes de surveillance de pression. Pour ce faire, les systèmes de surveillance sont couplés à des systèmes de sécurités actifs qui sont en communication avec un ou plusieurs capteurs aptes à fournir des informations sur l'état des roues tels que le système d'antiblocage des roues, comme par exemple l'ABS (acronyme anglo-saxon pour « Antilock Brake System) et l'ESP (acronyme anglo-saxon pour «Electronic Stability Program »).

Ces procédés de surveillance « indirects » peuvent être du type temporel ou fréquentiel.

Les procédés de surveillance de type temporel réalisent une comparaison des vitesses de rotation des roues à partir d'informations fournies par les capteurs fixes de vitesse de rotation de roue du système ABS. En effet, ce système ABS utilise un capteur propre à chaque roue donnant sa position angulaire sous forme d'impulsions. En sachant par exemple qu'en ligne droite une différence dans la pression des pneumatiques entraîne une différence du diamètre des roues donc de la vitesse de rotation, dès que le procédé de surveillance identifie un écart de vitesse de rotation pour une roue, une variation de pression de ladite roue est alors déterminée.

Concernant les procédés de surveillance de type fréquentiel, ils réalisent une comparaison d'une fréquence mesurée avec une fréquence de référence relative à une partie donnée du pneumatique qui oscille lorsque le véhicule est en mouvement. Dès qu'une variation de fréquence pour cette partie donnée de la roue est observée alors une variation de pression est alors identifiée qui peut alors concerner un sur-gonflage ou encore un sous-gonflage.

Cependant, un des inconvénients majeur de ces procédés de surveillance « indirects » est de fournir des évaluations imprécises de la variation de pression et d'être également souvent à l'origine de fausses alertes concernant des états de sur-gonflage ou de sous-gonflage du pneumatique.

On notera de plus que les procédés de surveillance « indirects » de type temporel ne peuvent détecter une variation de pression d'un pneumatique lorsque tous les pneumatiques du véhicule présentent simultanément des fuites ou sont dans un état de sous-gonflage ou de sur-gonflage.

La présente invention a pour objet de remédier en tout ou partie aux différents inconvénients cités précédemment en proposant un procédé et un système de surveillance de la pression du pneumatique qui sont fiables, robustes et d'une grande précision.

L'invention concerne un procédé de surveillance d'une pression d'un pneumatique monté sur une roue d'un véhicule en circulation, le procédé comportant les étapes suivantes :

- mesure d'une température relative à l'environnement immédiat du véhicule ;
- estimation de la masse du véhicule :

  - mesure d'au moins une première fréquence d'oscillation du pneumatique dans une première plage de fréquences et d'une deuxième fréquence d'oscillation du pneumatique dans une deuxième plage de fréquences, et
  - détermination de la pression du pneumatique en fonction des première et deuxième fréquences d'oscillation et de la température mesurées ainsi que de la masse estimée du véhicule.

Dans d'autres modes de réalisation:

- la détermination de la pression du pneumatique comprend les étapes suivantes :

  - sélection, dans des données de références, de fréquences d'oscillation de références qui sont relatives à des pressions du pneumatique et qui sont comprises dans la première plage de fréquences et la deuxième plage de fréquences, et
  - détermination pour les première et deuxième fréquences d'oscillation mesurées correspondant respectivement à des première et deuxième fréquences d'oscillation de références, d'une première pression estimée et d'une deuxième pression estimée du pneumatique.

- l'étape de sélection des fréquences d'oscillation de références est réalisée en fonction de la température mesurée et/ou de la masse estimée ;
- l'étape de détermination de la pression du pneumatique prévoit une correction des première et deuxième pressions estimées en vue d'obtenir des première et deuxième pressions corrigées, en fonction d'une variation de température entre la température mesurée et une précédente température mesurée ;
- l'étape de détermination comprend une étape de traitement de première et deuxième pressions corrigées relatives aux première et deuxième fréquences d'oscillation mesurées ;
- les première et deuxième fréquences d'oscillation mesurées et les fréquences d'oscillation de références sont relatives à des vibrations résultant :

  - d'un flanc du pneumatique qui subit des déformations de type torsion ;
  - d'une bande de roulement qui subit des déformations transversales par rapport à la direction d'avancement du véhicule, et/ou
  - d'une partie du pneumatique qui subit des déformations tridimensionnelles.

- l'étape de détermination d'une pression est réalisée par un filtre de Kalman, et
- le procédé comprend une étape de transmission d'une alerte au conducteur du véhicule en fonction de la détection d'une variation de pression du pneumatique.

L'invention concerne également, un système de surveillance de la pression d'un pneumatique comprenant une unité de calcul reliée à des capteurs d'informations, et des éléments matériels et logiciels pour la mise en oeuvre d'un tel procédé, dans lequel que les éléments matériels comprennent un module de mémoire comportant des données de références.

L'invention concerne aussi un véhicule comprenant un tel système de surveillance de la pression d'un pneumatique.

L'invention concerne également un programme d'ordinateur comprenant des instructions de code de programme pour l'exécution des étapes d'un tel procédé lorsque ledit programme est exécuté par une unité de calcul d'un système de surveillance de la pression d'un pneumatique.

D'autres avantages et caractéristiques de l'invention apparaîtront mieux à la lecture de la description d'un mode de réalisation préféré qui va suivre, en référence aux figures, réalisé à titre d'exemple indicatif et non limitatif :

- la figure 1 est un schéma de principe d'un système de surveillance de la pression d'un pneumatique selon le mode de réalisation de l'invention ;
- la figure 2 représente des courbes relatives aux fréquences d'oscillation de références relatives à des pressions du pneumatique pour différentes masses d'un véhicule, selon le mode de réalisation de l'invention ;
- la figure 3 est un logigramme relatif à un procédé de surveillance de la pression du pneumatique selon le mode de réalisation de l'invention ;
- la figure 4 est une courbe de fréquence d'oscillation estimée qui est corrigée par le procédé selon le mode de réalisation de l'invention, et
- la figure 5 illustre une représentation schématique d'un filtre de Kalman mis en oeuvre dans le procédé selon le mode de réalisation de l'invention.

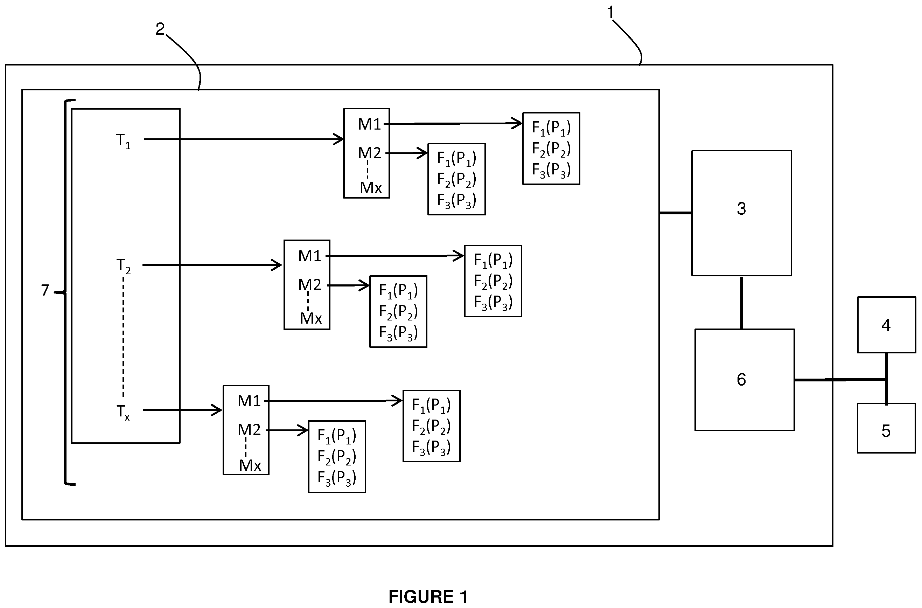

Sur la figure 1, le système de surveillance de la pression d'un pneumatique monté sur la jante d'une roue d'un véhicule comprend une unité de calcul 1 et des capteurs d'informations 4, 5.

Cette unité de calcul 1 comprend des éléments matériels et logiciels. Les éléments matériels comprennent au moins un microprocesseur 3, un module de mémoire 2 ainsi qu'une interface de communication 6, visibles sur la figure 1. Le microprocesseur 3 est apte à coopérer avec le module de mémoire 2 en vue de mettre en oeuvre les éléments logiciels. Cette unité de calcul 1 peut être couplée à une IHM (acronyme d'interface homme machine) permettant notamment de signifier au conducteur du véhicule, une alerte concernant un état de surgonflage ou encore de sous-gonflage, pouvant dans ce dernier cas résulter d'une fuite du gaz contenu dans le pneumatique.

L'interface de communication 6 de cette unité de calcul 1 est reliée aux capteurs d'informations 4, 5 via une liaison sans fil ou filaire.

Ces capteurs d'informations comprennent au moins :

- un capteur de température 4, et
- un capteur de vitesse 5.

Le capteur de température 4 est agencé au niveau du véhicule afin de mesurer précisément la température présente dans l'environnement immédiat de ce dernier. Le capteur de température 4 peut être situé, par exemple dans un rétroviseur du véhicule. Ce capteur de température 4 est apte à transmettre un signal en direction du l'unité de calcul 1.

Le capteur de vitesse 5 est un dispositif de détection de la vitesse de rotation d'une roue du véhicule. Il est formé de manière non limitative et non exhaustive d'un élément codeur rendu solidaire d'une bague tournante du roulement du véhicule et d'une composante montée fixe par rapport à une bague non tournante du roulement. L'élément codeur et la composante sont disposés en regard l'un de l'autre, axialement ou radialement, avec un faible entrefer. L'élément codeur entraîné en rotation par la bague tournante crée des variations de champ magnétique. La composante de ce capteur est apte à détecter ces variations de champ magnétique en les transformant en un signal électrique dont la fréquence est représentative de la vitesse de rotation du roulement. Le signal issu du capteur de vitesse est transmis à l'unité de calcul 1. Chaque roue du véhicule est munie d'un tel capteur de vitesse 5.

On notera que de manière préférentielle, l'unité de calcul 1 et les capteurs d'informations, tel que le capteur de vitesse 5, sont compris dans le dispositif ESP équipant le véhicule. De même, le capteur de température 4 peut être un capteur d'informations déjà présent dans le véhicule et coopérant avec d'autres dispositifs du véhicule, comme par exemple le module de climatisation.

L'unité de calcul 1 comprend dans son module de mémoire 2 des données dites données de références 7, visibles à la figure 1, qui y sont préalablement stockées par le constructeur du véhicule, notamment lors de la fabrication du véhicule.

Ces données de références 7 sont des informations concernant le véhicule tels que des paramètres relatifs aux pneumatiques équipant le véhicule. Ces paramètres proviennent de mesures réalisées par le constructeur.

Ainsi que l'illustre la figure 1, ces données de références 7 comprennent pour différentes masses M1, M2,...Mx de références du véhicule, des fréquences d'oscillation de références du pneumatique relatives à des pressions du gaz compris dans ce pneumatique.

Ces données de références peuvent contenir des fréquences d'oscillation de références du pneumatique relatives à des pressions pour différentes masses M1, M2,...Mx et températures $T_1$, $T_2$,...$T_x$ de références.

On entend par fréquence d'oscillation du pneumatique, une fréquence qui mesure les harmoniques et vibrations se produisant au niveau de différentes parties du pneumatique lorsque le véhicule circule. En effet, lorsque le véhicule est en mouvement le pneumatique entre en résonnance et ses différentes parties se mettent à vibrer sous l'effet de déformations.

Les fréquences d'oscillation du pneumatique sont préférentiellement comprises dans une plage globale de fréquences d'environ 0 à 200Hz, de préférence de 0 à 150Hz. Chaque partie du pneumatique qui se déforme correspond à une plage de fréquences d'oscillation comprise dans cette plage globale.

On notera que sur la figure 1, pour simplifier, les fréquences d'oscillation de références pour différentes plages distinctes de fréquences, ici trois plages, et pour les masses M1, M2,...Mx de références du véhicule, sont notées : $F_1(P_1)$, $F_2(P_2)$ et $F_3(P_3)$.

Dans la présente invention, les fréquences d'oscillation sont observées de manière non limitative et non exhaustive au niveau :

- du flanc du pneumatique qui subit des déformations de type torsion et dont les fréquences d'oscillation sont comprises dans une plage allant d'environ 30 à 60Hz, de préférence de 35 à 55 ;
- de la bande de roulement, en particulier des patins de gomme qui la constituent, qui subit des déformations transversales par rapport à la direction d'avancement du véhicule et dont les fréquences d'oscillation sont comprises dans une plage allant d'environ 65 à 90Hz, de préférence de 75 à 85, et
- de la partie du pneumatique qui subit des déformations tridimensionnelles, autrement appelée mode 3D, et dont les fréquences d'oscillation sont comprises dans une plage allant d'environ 95 à 120Hz, de préférence de 100 à 110. Ces déformations tridimensionnelles correspondent à une déformation de tout le pneumatique.

On notera qu'une variation de pression du gaz compris dans le pneumatique induit une variation des fréquences d'oscillation du pneumatique dans la plage de fréquences globale.

En effet, pour les fréquences d'oscillation suivantes lorsque la pression du pneumatique diminue :

- la fréquence du flanc du pneumatique diminue également ;
- la fréquence de la bande de roulement augmente, et
- la fréquence du mode 3D diminue aussi.

A l'inverse, lorsque la pression augmente :

- la fréquence du flanc du pneumatique augmente également ;
- la fréquence de la bande de roulement diminue, et
- la fréquence du mode 3D augmente aussi.

On notera que d'autres parties du pneumatique peuvent être prises en compte comme celles qui subissent des déformations verticales par rapport à la direction d'avancement du véhicule.

Comme nous l'avons vu précédemment, ces données de références 7 correspondent à différentes mesures de fréquences d'oscillation de références et de pressions du pneumatique qui sont réalisées pour différentes masses M1, M2,...Mx de références du véhicule et optionnellement à différentes températures $T_1, T_2,...T_x$ de références relatives à l'environnement dans lequel est compris le véhicule.

Ces masses M1, M2,...Mx de références sont comprises entre la masse à vide et la masse à pleine charge du véhicule.

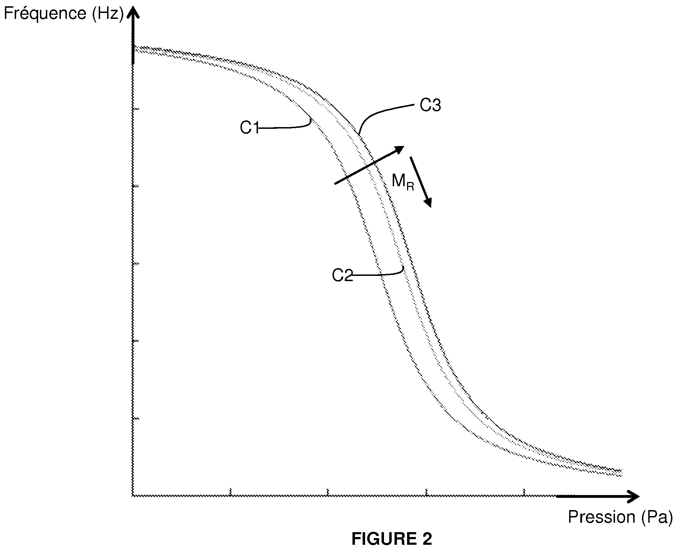

Les fréquences d'oscillation mesurées relatives à des pressions définissent alors des courbes C1, C2 et C3, illustrées sur la figure 2, pour différentes masses M1, M2,...Mx de références du véhicule. La courbe C1 définit les fréquences d'oscillation mesurées relatives à des pressions pour la masse la moins importante du véhicule contrairement à la courbe C3 qui est relative à la masse la plus importante du véhicule.

Sur la figure 2, les fréquences d'oscillation de références relatives aux pressions du pneumatique définies par les courbes C1 à C3 correspondent aux fréquences d'oscillation de références de la bande de roulement.

On remarquera d'ailleurs sur la figure 2 que plus la masse de référence $M_r$ augmente plus la pression augmente et la fréquence d'oscillation diminue. Plus précisément, plus la masse $M_r$ augmente, plus le rayon diminue et plus la fréquence d'oscillation du flanc du pneumatique diminue. La fréquence d'oscillation du mode de la bande de roulement augmente et la fréquence du mode 3D augmente.

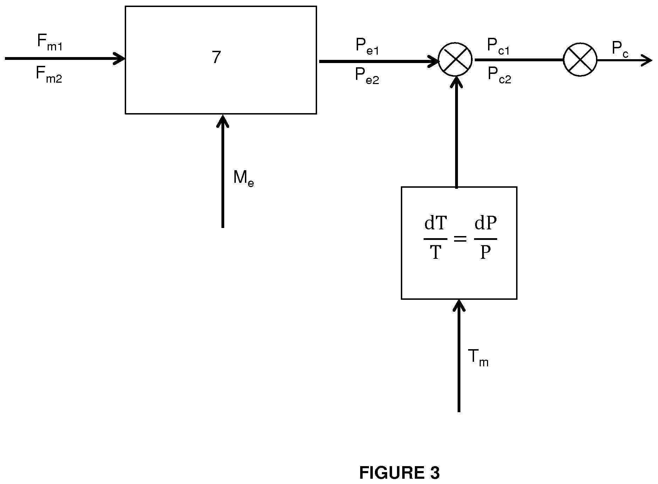

Le procédé de surveillance de la pression du pneumatique est mis en oeuvre lorsque le véhicule circule. Ce procédé qui est illustré sur la figure 3, comprend une étape de mesure de la température $T_m$ relative à l'environnement immédiat dans lequel le véhicule évolue.

Le procédé comprend également une étape d'estimation de la masse $M_e$ du véhicule qui est déterminée en application des principes fondamentaux de la dynamique, à partir du bilan des forces qui s'exercent sur le véhicule.

Le procédé prévoit par la suite une étape de mesure de première $F_{m1}$ et deuxième $F_{m2}$ fréquences d'oscillation du pneumatique à partir des informations émanant du signal transmis par le capteur de vitesse 5 à l'unité de calcul 1.

Pour ce faire, une fréquence d'oscillation $F_{m1}$, $F_{m2}$ est mesurée dans au moins deux plages de fréquences, c'est-à-dire pour au moins deux parties du pneumatique. En effet, une première fréquence d'oscillation $F_{m1}$ du pneumatique est mesurée dans une première plage de fréquences et une deuxième fréquence d'oscillation $F_{m2}$ du pneumatique dans une deuxième plage de fréquences.

Préférentiellement, une fréquence d'oscillation est mesurée dans trois plages de fréquences distinctes correspondant aux fréquences d'oscillation du flanc et de la bande de roulement du pneumatique ainsi que du mode 3D.

Plus précisément, l'unité de calcul 1 réalise un traitement du spectre du signal reçu du capteur de vitesse 5 qui est agencé au niveau de la roue du véhicule en réalisant un filtrage.

Ce filtrage est réalisé à partir d'un filtre passe-bande qui est un filtre qui laisse passer qu'une bande ou intervalle de fréquences compris entre une fréquence de coupure basse et une fréquence de coupure haute du filtre. Le concept de filtre passe-bande est une transformation mathématique appliquée à des données, ici le signal. L'implémentation du filtre passe-bande peut se faire numériquement ou avec des composantes électroniques. Cette transformation a pour fonction d'atténuer les fréquences à l'extérieur de la bande passante, l'intervalle de fréquences compris entre les fréquences de coupure. Ainsi, uniquement les fréquences comprises dans cet intervalle sont conservées intactes ou avec une faible atténuation.

Afin de mesurer, les première $F_{m1}$ et deuxième $F_{m2}$ fréquences d'oscillation, deux filtres passe-bande sont configurés avec les valeurs des plages de fréquences d'oscillation relatives à deux parties du pneumatique choisies parmi le flanc, la bande de roulement du pneumatique et le mode 3D.

Les signaux filtrés obtenus font ensuite l'objet d'un traitement particulier par l'unité de calcul 1 qui met alors en oeuvre grâce à ses éléments matériels et logiciels un algorithme d'estimation des moindres carrées récursifs à variables instrumentales avec facteur d'oubli adaptatif.

Ainsi, les première $F_{m1}$ et deuxième $F_{m2}$ fréquences d'oscillation sont mesurées à partir d'un traitement portant sur le signal transmis par le capteur de vitesse 5 relatif à la vitesse angulaire de la roue sur laquelle est monté le pneumatique. On notera que ces première $F_{m1}$ et deuxième $F_{m2}$ fréquences d'oscillation mesurées par l'unité de calcul 1 sont également nommées fréquences d'oscillation brutes.

Le procédé prévoit ensuite une étape de sélection dans les données de références 7, de fréquences d'oscillation de références qui sont relatives à des pressions du pneumatique et qui sont comprises dans la plage de fréquences des première $F_{m1}$ et deuxième $F_{m2}$ fréquences d'oscillation mesurées.

Plus précisément, ces fréquences d'oscillation de références relatives à des pressions du pneumatique sont sélectionnées à partir de la masse $M_e$ estimée et optionnellement à partir de la température $T_e$ mesurée.

Ensuite le procédé prévoit une étape de détermination à partir de la première fréquence d'oscillation mesurée $F_{m1}$ correspondant à une première fréquence d'oscillation issue des fréquences d'oscillation de références sélectionnées, une première pression estimée $P_{e1}$ du pneumatique. De même, une deuxième pression estimée $P_{e2}$ est déterminée par la correspondance de la deuxième fréquence d'oscillation mesurée $F_{m2}$ avec une deuxième fréquence d'oscillation émanant des fréquences d'oscillation de références sélectionnées.

On notera que les première et deuxième fréquences d'oscillation de références qui correspondent respectivement aux première $F_{m1}$ et deuxième $F_{m2}$ fréquences d'oscillation mesurées sont dites fréquences d'oscillation estimées.

Le procédé comprend une étape de calcul de la variation de température entre la température mesurée $T_m$ et la précédente température relative à l'environnement où circulait le véhicule.

En faisant l'hypothèse que le gaz compris dans le pneumatique est un gaz parfait et dans la mesure où on a une variation de température et que le volume du gaz compris dans le pneumatique ne varie pas, la variation de température est égale alors, selon la loi des gaz parfait PV=nRT à la variation de pression soit :

$$\frac{dT}{T} = \frac{dP}{P}$$

Ainsi, la variation de température calculée par l'unité de calcul 1 est égale à la variation de pression qu'il y a entre la première pression estimée $P_{e1}$ et la première pression corrigée $P_{c1}$ qui doit être déterminée. De même, il s'agit de la variation de pression qu'il y a entre la deuxième pression estimée $P_{e2}$ et la deuxième pression corrigée $P_{c2}$ qui doit également être déterminée.

Ainsi, le procédé prévoit alors une application de cette variation de température et donc de pression, aux première $P_{e1}$ et deuxième $P_{e2}$ pressions estimées pour les première $F_{m1}$ et deuxième $F_{m2}$ fréquences d'oscillation mesurées de sorte à déterminer une première $P_{c1}$ et deuxième $P_{c2}$ pressions corrigées. Cette étape de correction du procédé permet de réajuster chaque pression estimée qui a été surévaluée ou sous-évaluée.

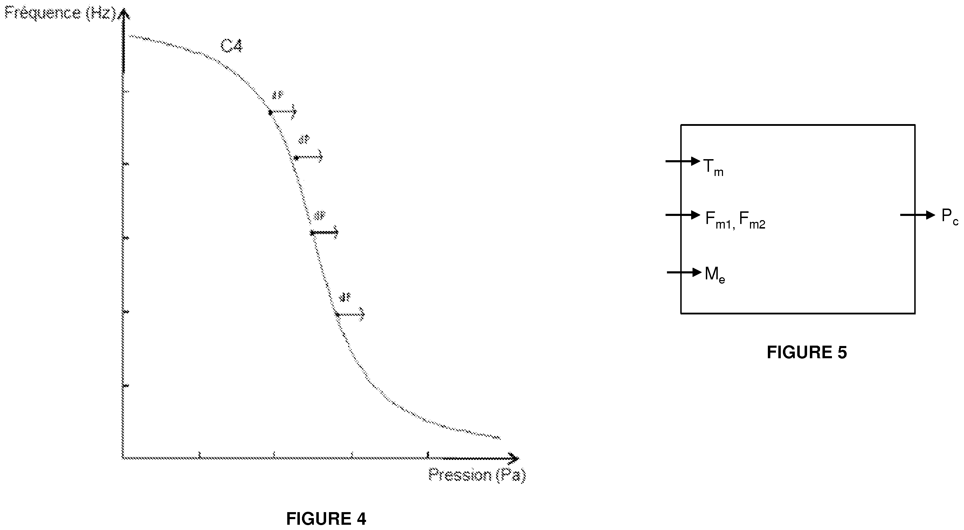

Dans un exemple qui illustre cette étape d'application du procédé, la courbe C4, visible sur la figure 4, définie un exemple de fréquences d'oscillation estimées pour la bande de roulement du pneumatique, relatives à des pressions estimées qui sont alors corrigées par l'application de cette variation de pression dP aux pressions estimées.

Ainsi, on obtient alors des première $P_{c1}$ et deuxième $P_{c2}$ pressions corrigées pour respectivement les première $F_{m1}$ et deuxième $F_{m2}$ fréquences d'oscillation mesurées dans des plages distinctes de fréquences. Ces première $P_{c1}$ et deuxième $P_{c1}$ pressions corrigées font l'objet d'un traitement particulier qui permet d'obtenir une pression $P_c$ du pneumatique qui est une pression corrigée, dite pression globale corrigée, et donc une variation de pression de ce dernier.

Dans la mesure où la pression $P_c$ du pneumatique, ici la pression globale corrigée, permet de déterminer une variation de pression en comparaison de la pression corrigée précédente qui avait été déterminée, une alerte est alors transmise au conducteur de véhicule via l'IHM relié à l'unité de calcul 1, lui signifiant qu'un ou plusieurs des pneumatiques équipant son véhicule est dans un état de sur-gonflage ou de sous-gonflage avec un risque de fuite.

Ainsi, le procédé a pour avantage d'être fiable et robuste car il permet de déterminer une pression $P_c$ du pneumatique en prenant en compte des paramètres comme la masse $M_e$ du véhicule et la température $T_m$ de l'environnement dans lequel ce dernier circule.

Un aspect de l'invention concerne un programme d'ordinateur comprenant des instructions de code de programme pour l'exécution des étapes du procédé de surveillance de la pression du pneumatique qui est exécuté par les éléments matériels de l'unité de calcul 1 du système de surveillance de la pression d'un pneumatique.

De manière complémentaire afin de limiter les effets de l'estimation de la masse $M_e$, le procédé prévoit la mise en oeuvre par l'unité de calcul 1 d'un filtre de Kalman, visible à la figure 5, qui permet à partir de données mesurées comme la température $T_m$ et les fréquences d'oscillation $F_{m1}$, $F_{m2}$ et d'une donnée bruitée comme la masse $M_e$ estimée, de déterminer des fréquences d'oscillation corrigées et par conséquent une pression corrigée $P_c$.

L'unité de calcul 1 est apte à mettre en oeuvre d'autres algorithmes que le filtre de Kalman pour déterminer ces fréquences corrigées comme par exemple des fonctions mathématiques d'interpolation linéaire ou cubique ou encore des méthodes de recalage de fonction sur base de tangente.

La présente invention n'est pas limitée au mode de réalisation qui a été explicitement décrit, mais elle en inclut les diverses variantes et généralisations contenues dans le domaine des revendications ci-après.

**Revendications**

1. Procédé de surveillance d'une pression d'un pneumatique monté sur une roue d'un véhicule en circulation, le procédé comportant une étape de

   - mesure d'une température ($T_m$) relative à l'environnement immédiat du véhicule ;

   ledit procédé étant **caractérisé en ce qu'**il comporte en outre les étapes suivantes :

   - estimation de la masse ($M_e$) du véhicule ;
   - mesure d'au moins une première fréquence d'oscillation ($Fm_1$) du pneumatique dans une première plage de fréquences et d'une deuxième fréquence d'oscillation ($Fm_2$) du pneumatique dans une deuxième plage de fréquences, et
   - détermination de la pression ($P_c$) du pneumatique en fonction des première ($Fm_1$) et deuxième ($Fm_2$) fréquences d'oscillation et de la température ($T_m$) mesurées ainsi que de la masse ($M_e$) estimée du véhicule.

2. Procédé selon la revendication précédente, **caractérisé en ce que** la détermination de la pression du pneumatique comprend les étapes suivantes :

   - sélection, dans des données de références (7), de fréquences d'oscillation de références qui sont relatives à des pressions du pneumatique et qui sont comprises dans la première plage de fréquences et la deuxième plage de fréquences, et
   - détermination pour les première ($Fm_1$) et deuxième ($F_{m2}$) fréquences d'oscillation mesurées correspondant respectivement à des première et deuxième fréquences d'oscillation de références, d'une première pression estimée ($P_{e1}$) et d'une deuxième pression estimée ($P_{e2}$) du pneumatique.

3. Procédé selon la revendication précédente, **caractérisé en ce que** l'étape de sélection des fréquences d'oscillation de références est réalisée en fonction de la température mesurée ($T_m$) et/ou de la masse estimée ($M_e$).

4. Procédé selon l'une quelconque des revendications 2 et 3, **caractérisé en ce que** l'étape de détermination de la pression ($P_c$) du pneumatique prévoit une correction des première ($P_{e1}$) et deuxième ($P_{e2}$) pressions estimées en vue d'obtenir une première ($P_{c1}$) et deuxième ($P_{c2}$) pressions corrigées, en fonction d'une variation de température entre la température mesurée ($T_m$) et une précédente température mesurée.

5. Procédé selon l'une quelconque des revendications 2 à 4, **caractérisé en ce que** l'étape de détermination comprend une étape de traitement de première ($P_{c1}$) et deuxième ($P_{c2}$) pressions corrigées relatives aux première ($F_{m1}$) et deuxième ($F_{m2}$) fréquences d'oscillation mesurées.

6. Procédé selon l'une quelconque des revendications précédentes, **caractérisé en ce que** les première ($F_{m1}$) et deuxième ($F_{m2}$) fréquences d'oscillation mesurées et les fréquences d'oscillation de références sont relatives à des vibrations résultant :

   - d'un flanc du pneumatique qui subit des déformations de type torsion ;
   - d'une bande de roulement qui subit des déformations transversales par rapport à la direction d'avancement du véhicule, et/ou
   - d'une partie du pneumatique qui subit des déformations tridimensionnelles.

7. Procédé selon l'une quelconque des revendications précédente, **caractérisé en ce que** l'étape de détermination d'une pression ($P_c$) est réalisée par un filtre de Kalman.

8. Procédé selon l'une quelconque des revendications précédente, **caractérisé en ce qu'**il comprend une étape de transmission d'une alerte au conducteur du véhicule en fonction de la détection d'une variation de pression du pneumatique.

9. Système de surveillance de la pression d'un pneumatique comprenant une unité de calcul (1) reliée à des capteurs d'informations (4, 5), et des éléments matériels et logiciels pour la mise en oeuvre du procédé selon l'une quelconque des revendications 1 à 8, **caractérisé en ce que** les éléments matériels comprennent un module de mémoire (2) comportant des données de références (7).

10. Véhicule comprenant un système de surveillance de la pression d'un pneumatique selon la revendication précédente.

11. Programme d'ordinateur comprenant des instructions de code de programme pour l'exécution des étapes du procédé selon l'une quelconque des revendications 1 à 8 lorsque ledit programme est exécuté par une unité de calcul (1) d'un système de surveillance de la pression d'un pneumatique.

**Patentansprüche**

1. Verfahren zur Überwachung eines Drucks eines auf ein Rad eines fahrenden Fahrzeugs montierten Luftreifens, wobei das Verfahrens einen Schritt aufweist des

- Messens einer Temperatur ($T_m$) bezüglich der direkten Umgebung des Fahrzeugs;

wobei das Verfahren **dadurch gekennzeichnet ist, dass** es außerdem die folgenden Schritte aufweist:

- Schätzen der Masse ($M_e$) des Fahrzeugs;
- Messen mindestens einer ersten Schwingungsfrequenz ($F_{m1}$) des Luftreifens in einem ersten Frequenzbereich und einer zweiten Schwingungsfrequenz ($F_{m2}$) des Luftreifens in einem zweiten Frequenzbereich, und
- Ermitteln des Drucks ($P_c$) des Luftreifens abhängig von den gemessenen ersten ($F_{m1}$) und zweiten ($F_{m2}$) Schwingungsfrequenzen und der gemessenen Temperatur ($T_m$) sowie der geschätzten Masse ($M_e$) des Fahrzeugs.

2. Verfahren nach dem vorhergehenden Anspruch, **dadurch gekennzeichnet, dass** die Ermittlung des Drucks des Luftreifens die folgenden Schritte enthält:

- Auswahl, unter Bezugsdaten (7), von Bezugs-Schwingungsfrequenzen, die sich auf Drücke des Luftreifens beziehen und die im ersten Frequenzbereich und im zweiten Frequenzbereich enthalten sind, und
- Ermittlung für die gemessenen ersten ($F_{m1}$) und zweiten ($F_{m2}$) Schwingungsfrequenzen, die ersten bzw. zweiten Bezugs-Schwingungsfrequenzen entsprechen, eines ersten geschätzten Drucks ($P_{e1}$) und eines zweiten geschätzten Drucks ($P_{e2}$) des Luftreifens.

3. Verfahren nach dem vorhergehenden Anspruch, **dadurch gekennzeichnet, dass** der Auswahlschritt der Bezugs-Schwingungsfrequenzen abhängig von der gemessenen Temperatur ($T_m$) und/oder der geschätzten Masse ($M_e$) durchgeführt wird.

4. Verfahren nach einem der Ansprüche 2 und 3, **dadurch gekennzeichnet, dass** der Schritt der Ermittlung des Drucks ($P_c$) des Luftreifens eine Korrektur der ersten ($P_{e1}$) und zweiten ($P_{e2}$) geschätzten Drücke vorsieht, um einen ersten ($P_{c1}$) und zweiten ($P_{c2}$) korrigierten Druck zu erhalten, abhängig von einer Temperaturänderung zwischen der gemessenen Temperatur ($T_m$) und einer vorhergehenden gemessenen Temperatur.

5. Verfahren nach einem der Ansprüche 2 bis 4, **dadurch gekennzeichnet, dass** der Ermittlungsschritt einen Verarbeitungsschritt erster ($P_{c1}$) und zweiter ($P_{c2}$) korrigierter Drücke bezüglich der gemessenen ersten ($F_{m1}$) und zweiten ($F_{m2}$) gemessenen Schwingungsfrequenzen enthält.

6. Verfahren nach einem der vorhergehenden Ansprüche, **dadurch gekennzeichnet, dass** die ersten ($F_{m1}$) und zweiten ($F_{m2}$) gemessenen Schwingungsfrequenzen und die Bezugs-Schwingungsfrequenzen sich auf Schwingungen beziehen, die resultieren aus:

- einer Flanke des Luftreifens, die Verformungen von der Art Torsion erfährt;
- einem Laufstreifen, der Querverformungen bezüglich der Fahrtrichtung des Fahrzeugs erfährt, und/oder
- einem Teil des Luftreifens, der dreidimensionale Verformungen erfährt.

7. Verfahren nach einem der vorhergehenden Ansprüche, **dadurch gekennzeichnet, dass** der Schritt der Ermittlung eines Drucks ($P_c$) durch einen Kalman-Filter durchgeführt wird.

8. Verfahren nach einem der vorhergehenden Ansprüche, **dadurch gekennzeichnet, dass** es einen Schritt der Übertragung einer Warnung an den Fahrer des Fahrzeugs abhängig von der Erfassung einer Druckänderung des Luftreifens enthält.

9. System zur Überwachung des Drucks eines Luftreifens, das eine mit Informationssensoren (4, 5) verbundene Recheneinheit (1) und Hardware- und Softwareelemente zur Durchführung des Verfahrens nach einem der Ansprüche 1 bis 8 enthält, **dadurch gekennzeichnet, dass** die Hardwareelemente ein Speichermodul (2) enthalten, das Bezugsdaten (7) aufweist.

10. Fahrzeug, das ein System zur Überwachung des Drucks eines Luftreifens nach dem vorhergehenden Anspruch enthält.

11. Computerprogramm, das Programmcodeanweisungen zur Ausführung der Schritte des Verfahrens nach einem der Ansprüche 1 bis 8 enthält, wenn das Programm von einer Recheneinheit (1) eines Überwachungssystems des Drucks eines Luftreifens ausgeführt wird.

## Claims

1. Method for monitoring a pressure of a tire mounted on a wheel of a vehicle in motion, the method comprising a step of:

- measurement of a temperature ($T_m$) relative to the immediate environment of the vehicle;

said method being **characterized in that** it further comprises the following steps:

- estimation of the weight ($M_e$) of the vehicle;
- measurement of at least one first oscillation frequency ($Fm_1$) of the tire in a first range of frequencies and of a second oscillation frequency ($Fm_2$) of the tire in a second range of frequencies, and
- determination of the pressure ($P_c$) of the tire as a function of the first ($Fm_1$) and second ($Fm_2$) oscillation frequencies and of the temperature ($T_m$) measured and of the estimated weight ($M_e$) of the vehicle.

2. Method according to the preceding claim, **characterized in that** the determination of the pressure of the tire comprises the following steps:

- selection, from reference data (7), of reference oscillation frequencies which are relative to pressures of the tire and which lie within the first range of frequencies and the second range of frequencies, and
- determination, for the first ($F_{m1}$) and second ($F_{m2}$) measured oscillation frequencies corresponding respectively to first and second reference oscillation frequencies, of a first estimated pressure ($P_{e1}$) and of a second estimated pressure ($P_{e2}$) of the tire.

3. Method according to the preceding claim, **characterized in that** the step of selection of the reference oscillation frequencies is performed as a function of the measured temperature ($T_m$) and/or of the estimated weight ($M_e$).

4. Method according to either one of Claims 2 and 3, **characterized in that** the step of determination of the pressure ($P_c$) of the tire provides for a correction of the first ($P_{e1}$) and second ($P_{e2}$) estimated pressures in order to obtain first ($P_{c1}$) and second ($P_{c2}$) corrected pressures, as a function of a temperature variation between the measured temperature ($T_m$) and a preceding measured temperature.

5. Method according to any one of Claims 2 to 4, **characterized in that** the determination step comprises a step of processing of first ($P_{c1}$) and second ($P_{c2}$) corrected pressures relative to the first ($F_{m1}$) and second ($F_{m2}$) measured oscillation frequencies.

6. Method according to any one of the preceding claims, **characterized in that** the first ($F_{m1}$) and second ($F_{m2}$) measured oscillation frequencies and the reference oscillation frequencies relate to vibrations resulting:

- from a side wall of the tire which undergoes deformations of torsion type;
- from a tread which undergoes transverse deformations relative to the direction of advance of the vehicle, and/or
- from a part of the tire which undergoes three-dimensional deformations.

7. Method according to any one of the preceding claims, **characterized in that** the step of determination of a pressure ($P_c$) is performed by a Kalman filter.

8. Method according to any one of the preceding claims, **characterized in that** it comprises a step of transmission of a warning to the driver of the vehicle as a function of the detection of a variation of pressure of the tire.

9. System for monitoring the pressure of a tire comprising a computation unit (1) linked to information sensors (4, 5), and hardware and software elements for the implementation of the method according to any one of Claims 1 to 8, **characterized in that** the hardware elements comprise a memory module (2) including reference data (7).

10. Vehicle comprising a system for monitoring the pressure of a tire according to the preceding claim.

11. Computer program comprising program code instructions for the execution of the steps of the method according to any one of Claims 1 to 8 when said program is executed by a computation unit (1) of a system for monitoring the pressure of a tire.

FIGURE 1

FIGURE 2

FIGURE 3

FIGURE 5

FIGURE 4

13

**EP 3 083 293 B1**

## RÉFÉRENCES CITÉES DANS LA DESCRIPTION

### Documents brevets cités dans la description

- WO 0225291 A